(19) **Europäisches Patentamt / European Patent Office / Office européen des brevets**

(11) **EP 2 377 268 B1**

(12) **FASCICULE DE BREVET EUROPEEN**

(45) Date de publication et mention
de la délivrance du brevet:
**14.11.2012 Bulletin 2012/46**

(21) Numéro de dépôt: **10706012.1**

(22) Date de dépôt: **08.01.2010**

(51) Int Cl.:
***H04L 9/32*** *(2006.01)*

(86) Numéro de dépôt international:
**PCT/FR2010/050023**

(87) Numéro de publication internationale:
**WO 2010/081980 (22.07.2010 Gazette 2010/29)**

(54) **CODAGE DE POINTS D'UNE COURBE ELLIPTIQUE**

CODIERUNG VON PUNKTEN EINER ELLIPTISCHEN KURVE

ENCODING OF POINTS OF AN ELLIPTIC CURVE

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **14.01.2009 FR 0950189**

(43) Date de publication de la demande:
**19.10.2011 Bulletin 2011/42**

(73) Titulaire: **MORPHO
75015 Paris (FR)**

(72) Inventeur: **ICART, Thomas
F-75015 Paris (FR)**

(74) Mandataire: **Cabinet Plasseraud
52, rue de la Victoire
75440 Paris Cedex 09 (FR)**

(56) Documents cités:
• **THOMAS ICART: "How to Hash into Elliptic
Curves" , [Online] 24 mai 2009 (2009-05-24),
pages 1-14, XP002541652 IACR web site Extrait
de l'Internet: URL:http://eprint.iacr.org/
2009/226.pdf> [extrait le 2009-08-17]**

• **JEAN-SÉBASTIEN CORON AND THOMAS
ICART: "A Random Oracle into Elliptic Curves" ,
[Online] 11 juillet 2009 (2009-07-11), pages 1-12,
XP002541653 IACR web site Extrait de l'Internet:
URL:http://eprint.iacr.org/2009/340.pdf> [extrait
le 2009-08-17]**

• **BARRETO PAULO S. L. M. AND HAE KIM Y.: "Fast
hashing onto ellitpic curves over fields of
characteristic 3" , [Online] 15 novembre 2001
(2001-11-15), pages 1-11, XP002541311 IACR
website Extrait de l'Internet: URL:http://
eprint.iacr.org/2001/098.pdf> [extrait le
2009-08-12]**

• **BONEH D ET AL: "SHORT SIGNATURES FROM
THE WEIL PAIRING" JOURNAL OF
CRYPTOLOGY, SPRINGER, NEW YORK, NY, US,
vol. 17, no. 4, 21 septembre 2004 (2004-09-21),
pages 297-319, XP001221154 ISSN: 0933-2790**

• **SAHADEO PADHYE: "A Public Key
Cryptosystem Based on Singular Cubic Curve" ,
[Online] 4 avril 2005 (2005-04-04), pages 1-9,
XP002541654 IACR web site Extrait de l'Internet:
URL:http://eprint.iacr.org/2005/109.pdf> [extrait
le 2009-08-14]**

• **PAGE D ET AL: "A comparison of MNT curves
and supersingular curves" APPLICABLE
ALGEBRA IN ENGINEERING, COMMUNICATION
AND COMPUTING, SPRINGER, BERLIN, DE, vol.
17, no. 5, 5 septembre 2006 (2006-09-05), pages
379-392, XP019440974 ISSN: 1432-0622**

EP 2 377 268 B1

**Description**

La présente invention concerne la cryptographie de messages basée sur l'utilisation de points d'une courbe elliptique, et plus particulièrement une telle cryptographie de manière déterministe.

Afin d'appliquer un calcul cryptographique à un message, on met classiquement en oeuvre des algorithmes d'insertion de valeurs arbitraires au sein de structures mathématiques. A cet effet, les courbes elliptiques sont des structures mathématiques qui permettent de faciliter la mise en oeuvre de tels calculs cryptographiques et de sauver de la place mémoire par rapport à la mise en oeuvre d'autres calculs cryptographiques.

Toutefois, les algorithmes efficaces d'insertion de valeurs arbitraires utilisant les courbes elliptiques sont probabilistes. Par conséquent, le temps de mise en oeuvre de tels algorithmes n'est pas constant, il est fonction du message à coder. Ainsi, si un attaquant détermine différents temps de mise en oeuvre de l'algorithme appliqué, il peut obtenir des informations sur le message codé.

Afin de masquer le temps utilisé par un algorithme d'insertion probabiliste, il est possible de prévoir d'ajouter des étapes inutiles dans cet algorithme afin que son application s'étale toujours sur une période de temps de longueur identique, quel que soit le message traité.

Toutefois, un tel traitement est lourd et consomme beaucoup de temps.

BARRETO PAULO S. L. M; AND HAE KIM Y.: "Fast hashing onto ellitpic curves over fields of characteristic 3", 15 novembre 2001, pages 1-11, XP002541311 (disponible à l'adresse http://eprint.iacr.org/2001/098.pdf) divulgue un hachage rapide dans le domaine des courbes elliptiques sur des corps de caractéristique 3.

BONEH D ET AL: "SHORT SIGNATURES FROM THE WEIL PAIRING", JOURNAL OF CRYPTOLOGY, SPRINGER, NEW YORK, NY, US, vol. 17, no. 4, 21 septembre 2004, pages 297-319, XP001221154 ISSN: 0933-2790 divulgue un mécanisme de signatures courtes.

SAHADEO PADHYE: "A Public Key Cryptosystem Based on Singular Cubic Curve", 4 avril 2005, pages 1-9, XP002541654 IACR (disponible à l'adresse http://eprint.iacr.org/2005/109.pdf) divulgue un cryptosystème basé sur une courbe cubique singulière.

PAGE D ET AL: "A comparison of MNT curves and supersingular curves" APPLICABLE ALGEBRA IN ENGINEERING, COMMUNICATION AND COMPUTING, SPRINGER, BERLIN, DE, vol. 17, no. 5, 5 septembre 2006, pages 379-392, XP019440974 ISSN: 1432-0622, compare les courbes super-singulières aux courbes de Miyaji, Nakabayashi et Takano.

La présente invention vise à améliorer la situation.

Un premier aspect de la présente invention propose un procédé d'exécution d'un calcul cryptographique dans un composant électronique comprenant une étape d'obtention de points P sur une courbe elliptique vérifiant l'équation suivante :

$$Y^2 + a_1 XY + a_3 Y = X^3 + a_2 X^2 + a_4 + X + a_6 \quad (1)$$

où $a_1$, $a_2$, $a_3$, $a_4$ et $a_6$ sont des éléments d'un ensemble A d'éléments,
où A est un anneau des entiers modulaires $Z/qZ$ où q est un entier positif produit d'un nombre l de nombres premiers différents strictement supérieurs à 3, l étant un nombre entier supérieur ou égal à 2, ou A est un corps fini Fq avec q puissance d'un nombre entier premier;
où X et Y sont les coordonnées des points P et sont des éléments de A,

ledit procédé comprenant les étapes suivantes :

/a/ déterminer un paramètre (11) ;
/b/ obtenir des coordonnées X et Y d'un point P (13) par application d'une fonction (12) audit paramètre ;
la fonction φ d'Euler de A vérifiant l'équation :

$$\varphi(A) \bmod 3 = 1,$$

la fonction étant une fonction inversible et déterministe exprimée par une fraction rationnelle en $a_1$, $a_2$, $a_3$, $a_4$ et $a_6$ et en ledit paramètre dans A, et atteignant au moins un nombre $q/4^l$ de points P, avec l égal à 1 pour un corps fini Fq;
/c/ utiliser ledit point P dans une application cryptographique de chiffrement ou de hachage ou de signature ou d'authentification ou d'identification.

On entend par les termes 'atteindre au moins un nombre donné de points', le fait que la fonction considérée est adaptée pour fournir en sortie au moins ce nombre donné de points différents.

Grâce à ces dispositions, on peut réaliser, dans un composant électronique, un calcul cryptographique qui est basé sur des points d'une courbe elliptique, sans toutefois fournir d'informations à un potentiel attaquant, et tout en maintenant un niveau d'efficacité de mise en oeuvre élevé. En effet, la fonction permettant d'obtenir un point sur la courbe elliptique étant une fraction rationnelle, elle est de ce fait une fonction déterministe et non plus probabiliste :, le temps pris pour la calculer est constant quel que soit le paramètre d'entrée. Dans ces conditions, l'obtention de points sur la courbe elliptique est efficace et le temps de calcul ne dépend plus du message à coder, contrairement à l'art antérieur.

L'anneau A peut être un anneau RSA (pour 'Rivest Shamir Adleman' en anglais). Dans ce cas, cet anneau peut s'écrire Z/qZ, avec q égal au produit de deux nombres premiers, pour lequel φ(A) est difficile à calculer.

On note que la fonction d'Euler φ sur un anneau A est la fonction qui fournit le nombre d'éléments inversibles dans cet anneau A. Dans le cas où A est un corps fini Fq, on a :

$$\varphi(A) = q - 1$$

En se plaçant dans un anneau d'entiers modulaires Z/qZ où q est un entier positif produit d'un nombre I de nombres premiers différents strictement supérieurs à 3, I étant un nombre entier supérieur ou égal à 2, on a :

$$\varphi(A) = \text{ppcm}(p_1 - 1, p_2 - 1, \ldots, p_I - 1)$$

où ppcm signifie plus petit commun multiple et
les $p_i$ étant les I nombres premiers.

Etant donné qu'une fonction déterministe selon un mode de réalisation de la présente invention s'exprime sous la forme de fractions rationnelles, leur application prend toujours le même temps quel que soit le message, ou la donnée, sur lequel elle est appliquée.

En effet, dans l'ensemble A, les fonctions de la mise à la puissance 3 et 1/3 sont bijectives. Par conséquent, elles peuvent s'écrire sous la forme de fractions rationnelles et, de ce fait, la fonction déterministe f peut s'écrire sous forme de fractions rationnelles. Dans l'ensemble A, le calcul de la puissance 1/3 est le même que le calcul de la puissance $(2\varphi(a)+1)/3$. Ce dernier est un nombre entier car φ(A) mod 3 = 1. L'équation suivante est vérifiée dans A :

$$x^{\phi(A)} = 1$$

De cette équation se déduit l'équation suivante :

$$(x^3)^{(2\phi(A)+1)/3} = x^{3(2\phi(A)+1)/3} = x^{2\phi(A)+1} = x$$

Par conséquent, on peut écrire :

$$x^{(2\phi(A)+1)/3} = x^{1/3}$$

Or, la fonction f qui permet d'obtenir un point P de la courbe elliptique comprend cette mise à la puissance 1/3.

Ainsi, grâce au fait que la fonction de mise à la puissance 1/3 se calcule en temps constant quel que soit l'élément de A, il est possible d'obtenir des points de la courbe elliptique sans avoir à gérer des probabilités. Par conséquent, le temps d'exécution du calcul cryptographique ne dépend pas du message sur lequel ce calcul est effectué, comme cela est le cas pour la mise en oeuvre d'un tel calcul de manière probabiliste tel qu'effectué dans l'art antérieur.

De plus, dans le contexte où A correspond au corps fini Fq, la fonction déterministe f peut fournir au moins q/4 points P de la courbe elliptique. Dans le contexte où A correspond à un anneau d'entiers modulaires Z/qZ où q est un entier positif produit d'un nombre I de nombres premiers différents strictement supérieurs à 3, I étant un nombre entier supérieur ou égal à 2, la fonction déterministe f peut fournir au moins $q/4^I$ points P de la courbe elliptique.

Un tel nombre de points sur la courbe elliptique, obtenus ainsi de manière déterministe permet de nombreuses applications cryptographiques avec un niveau de sécurité élevé contre les potentielles attaques.

Dans un mode de réalisation de la présente invention, la courbe elliptique utilisée est une courbe de type Weierstrass, ou encore dite courbe de caractéristique p. Ici, on considère que q est différent de $2^n$.

L'équation (1) peut s'écrire :

$$Y^2 = X^3 + aX + b \,,$$

avec $a = a_2$ et $b = a_6$.

La fonction déterministe fournit les coordonnées d'un point de la courbe elliptique selon les équations respectives suivantes :

$$X = (v^2 - b - \frac{u^6}{27})^{(2\varphi(A)+1)/3} + \frac{u^2}{3} \qquad (4)$$

et

$$Y = ux + v \qquad (5)$$

où u est le paramètre déterminé à l'étape /a/, et
où $v = (3a - u^4)/(6u)$

Dans un autre mode de réalisation, la présente invention est appliquée aux courbes elliptiques en caractéristiques 2.

Dans ce cas, q vérifie l'équation :

$$q = 2^n \;;$$

où n est un nombre entier impair,
l'équation (1) s'écrit :

$$Y^2 + XY = X^3 + aX^2 + b \qquad,$$

avec $a = a_2$ et $b = a_6$ ; et
la fonction déterministe fournit les coordonnées d'un point de la courbe elliptique selon les équations respectives suivantes :

$$X = (w^4 + w^3 + b)^{(2\varphi(A)+1)/3} + w \qquad (16)$$

$$Y = uX + w^2$$

où u est le paramètre déterminé à l'étape /a/, et
où $w = a + u^2 + u$.

Dans un cas particulier avantageux, n est un nombre entier impair premier. En effet, un tel n permet de limiter certaines attaques.

Dans ce contexte, la fonction déterministe peut avantageusement fournir au moins $2^{n-2}$ points P de la courbe elliptique.

On peut avantageusement appliquer cette fonction à des courbes elliptiques de type Koblitz, cas particulier des courbes elliptiques de caractéristiques 2 dans lequel b est égal à 1 et a appartient à $F_2$. En effet, en utilisant des courbes elliptiques de Koblitz, on peut mettre en oeuvre des calculs cryptographiques de manières plus rapide.

On peut prévoir d'appliquer cette fonction déterministe à un résultat d'une fonction de hachage. Ainsi, à l'étape /a/, le paramètre u peut être obtenu par application d'une fonction de hachage h.

Dans un mode de réalisation, la fonction de hachage est une fonction à sens unique. Cette propriété est conservée : la fonction issue de la combinaison de la fonction déterministe et de la fonction de hachage présente cette propriété d'être à sens unique.

Ici, on obtient alors in fine une fonction sur une courbe elliptique qui est à sens unique, comme une fonction de hachage. Cette fonction est en outre résistante aux collisions.

On peut également prévoir d'appliquer cette fonction déterministe de telle sorte qu'elle présente la caractéristique de ne pas être différentiable (ou la caractéristique d'être 'indifférentiable' en anglais) d'une fonction aléatoire qui serait appliquée sur une courbe elliptique. Cette caractéristique présente des avantages, notamment lorsque cette fonction est appliquée dans un schéma cryptographique qui est prouvé comme étant sûr dans un modèle où les fonctions de hachage sont supposées être aléatoires. En effet, comme la fonction déterministe présente la caractéristique d'être non différentiable d'une fonction aléatoire, on obtient un schéma cryptographique sûr par application de cette fonction dans ce même type de schéma cryptographique.

A l'étape /a/, le paramètre u peut être obtenu par application d'une première fonction de hachage h et d'une seconde fonction de hachage h'. On note G le générateur d'un groupe de points de la courbe elliptique. Le calcul cryptographique peut comprendre l'application de la fonction suivante :

$$f\ (h) + h'.G$$

où f est la fonction déterministe, et
où G est un générateur d'un groupe de points de la courbe elliptique.

Ce groupe de points de la courbe elliptique peut correspondre aux points qui sont utilisés par le calcul cryptographique selon un mode de réalisation de la présente invention.

Un deuxième aspect de la présente invention un procédé d'authentification par au moins un mot de passe mettant en oeuvre un procédé d'exécution d'un calcul cryptographique selon le premier aspect de la présente invention, dans lequel à l'étape /a/ on détermine le paramètre en fonction du mot de passe, ledit mot de passe étant compris dans le paramètre, et

dans lequel une étape d'authentification est effectuée sur la base du point P.

Un troisième aspect de la présente invention propose un procédé de chiffrement d'une donnée, ledit chiffrement étant basé sur l'identité de Boneh-Franklin sur une courbe elliptique admettant une opération de couplage ; où l'identité est une valeur numérique identifiant une entité,

ledit procédé comprenant les étapes suivantes :

/a/ obtenir un point par application à l'identité d'un procédé d'exécution d'un calcul cryptographique selon la revendication 6 ;
/b/ obtenir une donnée chiffrée en combinant ledit point, un paramètre aléatoire et la donnée.

On entend ici par le terme 'combiner', le fait d'appliquer une combinaison des opérations de couplage, de hachage, une opération de 'ou exclusif' et une multiplication scalaire.

Un quatrième aspect de la présente invention propose un procédé d'exécution d'un calcul cryptographique dans un composant électronique comprenant une étape d'obtention de points P sur une courbe elliptique vérifiant l'équation suivante :

$$Y^2 + a_1 XY + a_3 Y = X^3 + a_2 X^2 + a_4 + X + a_6 \quad (1)$$

où $a_1$, $a_2$, $a_3$, $a_4$ et $a_6$ sont des éléments d'un ensemble A d'éléments,
où A est un anneau des entiers modulaires Z/qZ où q est un entier positif produit d'un nombre I de nombres premiers différents strictement supérieurs à 3, I étant un nombre entier supérieur ou égal à 2, ou A est un corps fini $F_q$ avec q puissance d'un nombre entier premier;
où X et Y sont les coordonnées des points P et sont des éléments de A,

ledit procédé comprenant les étapes suivantes :

/a/ déterminer un point P de coordonnées X et Y sur la courbe elliptique ;
/b/ obtenir un paramètre par application d'une fonction au point P ; la fonction φ d'Euler de A vérifiant l'équation :

$$\varphi(A) \bmod 3 = 1,$$

la fonction étant la fonction inverse d'une fonction déterministe exprimée par une fraction rationnelle en $a_1$, $a_2$, $a_3$ $a_4$ et $a_6$ et en ledit paramètre dans A, et atteignant au moins un nombre $q/4^I$ de points P, avec I égal à 1 pour un corps fini Fq ;
/c/ utiliser ledit paramètre dans une application cryptographique de chiffrement ou de hachage ou de signature ou d'authentification ou d'identification.

Ici, il convient de noter que la fonction déterministe telle qu'énoncée dans le premier aspect de la présente invention est une fonction inversible. Elle peut de ce fait avantageusement être utilisée dans le sens inverse de l'utilisation qui en est faite dans ce premier aspect de la présente invention. En effet, il peut être utile dans le domaine cryptographique de partir des points de la courbe elliptique pour obtenir le paramètre qui leur correspond via la fonction inverse de la fonction énoncée dans le premier aspect, notamment pour une application de compression de données.
Ainsi, un cinquième aspect de la présente invention propose un procédé de compression de données dans lequel les données à compresser correspondent respectivement à des couples de données X et Y correspondant à des coordonnées de points P d'une courbe elliptique vérifiant l'équation suivante :

$$Y^2 + a_1XY + a_3Y = X^3 + a_2X^2 + a_4 + X + a_6 \quad (1)$$

où $a_1$, $a_2$, $a_3$, $a_4$ et $a_6$ sont des éléments d'un ensemble A d'éléments,
où A est un anneau des entiers modulaires Z/qZ où q est un entier positif produit d'un nombre I de nombres premiers différents strictement supérieurs à 3, I étant un nombre entier supérieur ou égal à 2, ou A est un corps fini Fq avec q puissance d'un nombre entier premier;
où X et Y sont les coordonnées des points P et sont des éléments de A,

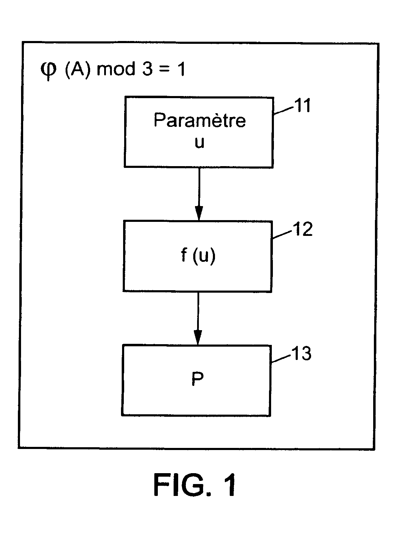

dans lequel on applique à chacun desdits couples de données les étapes /a/ à /c/ d'un procédé d'exécution d'un calcul cryptographique selon le quatrième aspect de la présente invention, et
dans lequel lesdits couples de données sont représentés par les paramètres respectivement obtenus à l'étape /c/.
Un sixième aspect de la présente invention propose un dispositif électronique comprenant des moyens adaptés pour la mise en oeuvre d'un procédé d'exécution d'un calcul cryptographique selon le premier aspect de la présente invention.
Un septième aspect de la présente invention propose un dispositif électronique comprenant des moyens adaptés pour la mise en oeuvre d'un procédé d'exécution d'un calcul cryptographique selon le quatrième aspect de la présente invention.
Un huitième aspect de la présente invention propose une carte à puce comprenant un dispositif électronique selon le sixième ou septième aspect de la présente invention.
D'autres aspects, buts et avantages de l'invention apparaîtront à la lecture de la description d'un de ses modes de réalisation.
L'invention sera également mieux comprise à l'aide de la figure 1 qui illustre les principales étapes d'un calcul cryptographique selon un mode de réalisation de la présente invention.
Toute courbe elliptique sur A vérifie l'équation suivante :

$$Y^2 + a_1 XY + a_3 Y = X^3 + a_2 X^2 + a_4 + X + a_6 \qquad (1)$$

où $a_1$, $a_2$, $a_3$, $a_4$ et $a_6$ sont des éléments de A,
où X et Y sont des éléments de l'ensemble A. Si l'équation suivante est vérifiée :

$$\varphi(A) = 1 \bmod 3 \qquad (2)$$

avec $\varphi$ la fonction d'Euler appliquée à A, alors la fonction de mise à la puissance 3 et la fonction de mise à la puissance 1/3 sont des fonctions calculables efficacement en temps constant quelle que soient les valeurs sur lesquelles elles sont calculées. Cette caractéristique permet d'obtenir de manière déterminée un point P de la courbe elliptique en fonction d'un paramètre, le temps de calcul ne dépendant pas du paramètre auquel est appliquée cette fonction déterministe f.

Cette fonction f est notée par la suite également $f_{a.b}$ ou encore $f_a$ selon le type d'équation de courbes elliptiques considérées.

La figure 1 illustre, à une étape 11, la détermination d'un paramètre u, élément du corps fini Fq considéré. Puis, on applique à ce paramètre la fonction déterministe f à une étape 12 pour, in fine, obtenir un point P de la courbe elliptique, de manière déterministe. Toutes ces étapes sont effectuées dans un anneau A, vérifiant l'équation (2).

Les sections suivantes présentent l'application de ces caractéristiques dans des cas particuliers d'équations de courbe elliptique. Un mode de réalisation de la présente invention peut être appliqué aux courbes elliptiques de type Weierstrass, c'est-à-dire en caractéristique p avec p>3, et aux courbes elliptiques en caractéristiques 2.

Dans les sections suivantes, la courbe elliptique considérée est de type Weierstrass sur un corps Fq.

Dans ce contexte, le cardinal q du corps fini de Galois considéré est égal à $p^n$, pour p nombre premier différent des valeurs 2 et 3. L'équation (1) peut s'écrire selon l'équation de Weierstrass suivante :

$$Y^2 = X^3 + aX + b \qquad (3)$$

où a et b sont des paramètres de la courbe elliptique, notée $E_{a.b}$.

Dans le corps fini A=Fq comprenant un nombre q d'éléments, où q vérifie l'équation (2), la fonction f de mise à la puissance 3 et la fonction de mise à la puissance 1/3 sont des bijections calculables efficacement en temps constant quelles que soient les valeurs sur lesquelles elles sont calculées.

Dans ces conditions, les coordonnées X et Y d'un point P de la courbe elliptique vérifient les équations respectives suivantes :

$$X = \left(v^2 - b - \frac{u^6}{27}\right)^{(2\varphi(A)+1)/3} + \frac{u^2}{3} \qquad (4)$$

et

$$Y = uX + v \qquad (5)$$

où

$$v = (3a - u^4)/(6u) \qquad (6)$$

où u est un paramètre selon un mode de réalisation de la présente invention, u appartenant au corps fini $F_q^*$.

On note que, dans le corps fini Fq, la mise à la puissance $((2\varphi(A)+1)/3)$ correspond à la mise à la puissance 1/3.

Ainsi, dans le cas où la courbe elliptique utilisée pour la mise en oeuvre d'un calcul cryptographique est de type Weierstrass, on peut avantageusement obtenir des points P de la courbe elliptique en fonction du paramètre u, selon les équations (4) et (5), de manière déterministe à temps de calcul constant par rapport au paramètre u.

En effet, un point P ayant des coordonnées vérifiant les équations (4) et (5) correspond à un unique point de la courbe elliptique selon l'équation (3) car l'intersection de la droite selon l'équation (5) avec la courbe elliptique considérée (3) vérifie le système d'équations suivant :

$$Y^2 = X^3 + aX + b \qquad (7)$$

et

$$Y = uX + v \qquad (5)$$

Ce système d'équation peut s'écrire comme suit :

$$X^3 - u^2X^2 + (a - 2uv)X + b - v^2 = 0 \qquad (8)$$

et

$$Y = uX + v \qquad (6)$$

On peut encore simplifier ces dernières équations comme suit :

$$X^3 - u^2X^2 + (\frac{u^4}{3})X + b - v^2 = 0 \qquad (9)$$

et

$$Y = uX + v \qquad (6)$$

Ainsi, ce système d'équations peut finalement s'écrire :

$$(X - \frac{u^2}{3})^3 + b - v^2 + \frac{u^6}{27} = 0 \qquad (10)$$

et

$$Y = uX + v \qquad (6)$$

L'équation (10) correspondant à l'équation (4), on en déduit que P est un point de la courbe elliptique considérée.

Par conséquent, un point P dont les coordonnées X et Y vérifient les équations (4) et (5) est un point de la courbe elliptique selon l'équation (3).

Par la suite, on note :

- $f_{a,b}$ la fonction qui fait correspondre à un élément de $F_q{}^*$ un point de la courbe elliptique (3) ;

0 ne peut être une entrée de $f_{a,b}$ autrement une division par 0 serait faite. Néanmoins, puisque le l'élément neutre du groupe de points de la courbe elliptique ne peut être obtenu par $f_{a,b}$, il est défini que 0 par $f_{a,b}$ correspond à l'élément neutre du groupe de point.

La fonction $f_{a,b}$ est une fonction déterministe quand la fonction de mise à la puissance 3, ou encore mise à la puissance 1/3, est une fonction bijective dans le corps fini de Galois considéré. On peut noter que le coût d'appliquer une telle fonction $f_{a,b}$ dans ces conditions correspond approximativement à une élévation à une puissance dans ce corps fini Fq.

Afin de décoder un message qui a été codé selon un calcul exécuté dans un mode de réalisation de la présente invention, il est prévu de déterminer une ou plusieurs valeurs de paramètre u ayant permis d'obtenir un point P donné de la courbe elliptique.

A cet effet, les sections suivantes indiquent comment calculer la fonction inverse de la fonction $f_{a,b}$.

Soit $u_1$ et $u_2$ deux éléments de $F_q{}^*$, chacun étant une solution de l'équation suivante :

$$u^4 - 6u^2 x + 6uy - 3a = 0 \qquad (11)$$

où a, x et y sont des éléments de Fq.

Soit b vérifiant l'équation suivante :

$$b = y^2 - x^3 - ax$$

Dans ces conditions, l'équation suivante est alors vérifiée :

$$f_{a,b}(u_1) = (x_1, y_1) = f_{a,b}(u_2) = (x_2, y_2) = f_{a,b}(u) = (x, y) \qquad (12)$$

En effet, tout d'abord, les points $P_1$ de coordonnées (x1, yl), $P_2$ de coordonnées $(x_2, y_2)$ et P de coordonnées (x,y) sont tous trois des points de la courbe elliptique $E_{a,b}$.

De plus, d'après l'équation (11), les points P et $P_1$ sont situés sur une droite d'équation suivante :

$$Y = u_1 X + \frac{3a - u_1^4}{6u_1} \qquad (13)$$

Or, comme démontré ci-avant, puisque q vérifie l'équation (2), la courbe elliptique (3) et la droite (13) ci-dessus se coupent en un seul point. Ainsi, les points P et $P_1$ correspondent à un seul et unique point.

En appliquant le même raisonnement aux points P et $P_2$, on en déduit de même que P et $P_2$ correspondent à un seul point également. Par conséquent, P, $P_1$ et $P_2$ correspondent au même point de la courbe elliptique.

Ainsi, il existe un paramètre u tel que :

$$f_{a,b}(u) = (x, y)$$

si et seulement si le paramètre u est une solution de l'équation (11).

Ainsi, la résolution de l'équation (11) permet de déterminer un paramètre u en fonction duquel on obtient un point P de la courbe elliptique selon l'équation suivante :

$$f_{a,b}(u) = P$$

L'équation (11) peut être résolue par des algorithmes usuels tels que l'algorithme de Berlekamp [Shoup, Journal of Symbolic Computation Vol 20:p363-397, 1995]. Grâce à cette équation (11), il est donc possible d'inverser aisément la fonction $f_{a,b}$ afin de retrouver le paramètre u correspond à un point P de la courbe elliptique.

Cette propriété permet également de borner le nombre de points atteint par $f_{a,b}$. Soit Im($f_{a,b}$) l'ensemble des points image de la fonction $f_{a,b}$. L'ensemble image Im($f_{a,b}$) a un cardinal plus petit que q, puisque q est le cardinal de Fq. De plus, l'équation (11) permet de démontrer que pour chaque point image, il y a au maximum 4 antécédents. De fait, le cardinal de Fq est au plus égal à 4 fois le cardinal de Im($f_{a,b}$). On obtient donc l'inéquation suivante :

$$q/4 \leq \#Im(f_{a,b}) \leq q$$

Il est également possible de donner un résultat heuristique sur le cardinal de Im($f_{a,b}$). L'équation (11) est une équation de degré 4 dans le corps fini Fq. Dans un corps fini Fq, il y a une probabilité de 2/5 pour qu'un quelconque polynôme de degré 4 n'ait pas de racine. On peut donc considérer que 3/5 des points de la courbe elliptique sont dans l'ensemble des points image Im($f_{a,b}$) et de ce fait peuvent être utilisés dans le calcul cryptographique selon un mode de réalisation de la présente invention.

Dans un mode de réalisation de la présente invention, on peut utiliser des courbes elliptiques sur un anneau Z/qZ où q est le produit de l nombre premiers $p_1,..., p_l$. Le théorème des restes chinois, résultat d'arithmétique modulaire traitant de résolution de systèmes de congruences, affirme que Z/qZ est isomorphe à $Z/p_1Z$ x ... x $Z/p_lZ$. De ce fait, il est équivalent d'étudier les courbes elliptiques sur chacun des $Z/p_iZ$. Or, puisque chaque $p_i$ est un nombre premier, $Z/p_iZ$ est en fait un corps que l'on peut noter $F_{pi}$. De plus, comme chaque $p_i$ est supérieur strictement à 3, l'équation d'une courbe elliptique sur $F_{pi}$ est de type Weierstrass.

Ainsi les équations (4) et (5) étant démontrées pour chacun des $F_{pi}$, elles sont également vraies pour $F_{p1}$ x ... x $F_{pl}$ = Z/qZ.

De plus, pour chacun des $F_{pi}$, on a

$$p_i/4 \leq \#Im(f_{a,b}) \leq p_i$$

Ceci permet donc de prouver que, sur Z/qZ, on a

$$p_1/4 \times ... \times p_l/4 = q/4^l \leq \#Im(f_{a,b}) \leq p_1 \times ... \times p_l = q$$

Dans un mode de réalisation de la présente invention, on peut également utiliser des courbes elliptiques en caractéristiques 2 qui vérifient l'équation suivante :

$$Y^2 + XY = X^3 + aX^2 + b \qquad\qquad (15)$$

où a et b sont des éléments du corps fini de Galois A= $F_2{}^n$.

Le nombre n peut être un nombre premier impair pour limiter les attaques possibles.

On a ici :

$$2^n \bmod 3 = 2$$

La fonction de mise à la puissance 3, et la fonction de mise à la puissance 1/3, est ici aussi une bijection calculable en temps constant quelles que soient les valeurs sur lesquelles elle est appliquée sur ce corps fini de Galois.

On note u et w les paramètres éléments de $F_2{}^n$, qui vérifient l'équation suivante :

$$w = a + u^2 + u$$

Les points P de coordonnées X et Y vérifiant respectivement les équations suivantes sont sur la courbe elliptique (15) :

$$X = (w^4 + w^3 + b)^{(2\varphi(A)+1)/3} + w \qquad (16)$$

$$Y = uX + w^2 \qquad (16')$$

Ainsi, dans le cas où la courbe elliptique utilisée pour la mise en oeuvre d'un calcul cryptographique est en caractéristique 2, on peut avantageusement obtenir des points P de la courbe elliptique en fonction du paramètre u, selon les équations (16) et (16'), de manière déterministe.

En effet, un point P ayant des coordonnées vérifiant les équations (16) et (16') correspond à un unique point de la courbe elliptique selon l'équation (15) car l'intersection de la droite selon l'équation (16') avec la courbe elliptique considérée (15) vérifie le système d'équations suivant :

$$Y^2 + XY = X^3 + aX^2 + b \qquad (15)$$

et

$$Y = uX + w^2 \qquad (16')$$

Ce système d'équation peut s'écrire comme suit :

$$X^3 + (a + u + u^2)X^2 + w^2 X + b + w^4 = 0 \qquad (17)$$

et

$$Y = uX + w^2 \qquad (16')$$

On peut encore simplifier ces dernières équations comme suit :

$$X^3 + wX^2 + w^2 X + b + w^4 = 0 \qquad (18)$$

et

$$Y = uX + w^2 \qquad (16')$$

Ainsi, ce système d'équations peut finalement s'écrire :

$$(X + w)^3 + b + w^3 + w^4 = 0 \qquad (19)$$

et

$$Y = uX + w^2 \qquad (16')$$

L'équation (19) correspondant à l'équation (16), on en déduit que P est un point de la courbe elliptique considérée.

Par conséquent, un point P dont les coordonnées X et Y vérifient les équations (16) et (16') est un point de la courbe elliptique selon l'équation (15).

Comme dans le cas des courbes elliptiques de type Weierstrass, ici également il est possible de borner le nombre de points compris dans l'image $\text{Im}(f_a)$ de $f_a$. Cet ensemble $\text{Im}(f_a)$ comprend au plus $2^n$ éléments puisque c'est le nombre d'éléments de l'ensemble de départ $F_2{}^n$.

L'équation (16') peut s'écrire :

$$0 = Y + a + uX + u^2 + u^4 \qquad (17)$$

Pour une valeur de u qui résolve l'équation ci-dessus, on a :

$$f_a(u) = (x, y)$$

L'équation (17) est de degré 4. Par conséquent, au moins 4 valeurs différentes du paramètre u résolvent cette équation. Ainsi, il y a au moins $2^n/4 = 2^{n-2}$ points image de $f_a$. Il y a donc au moins $2^{n-2}$ éléments dans l'ensemble de points image $\text{Im}(f_a)$.

Grâce aux caractéristiques de la présente invention, on dispose d'une fonction déterministe f, notée $f_{a,b}$ ou $f_a$ selon le type de courbes elliptiques considéré, qui a pour ensemble image un ensemble de points sur une courbe elliptique, le nombre de ces points étant élevé, puisqu'il est au minimum égal au quart du nombre q (cardinal du corps fini considéré) dans le cas des courbes elliptiques de type Weierstrass, ou au minimum égal à $2^{n-2}$ dans le cas des courbes elliptiques en caractéristiques 2. Cette fonction déterministe f est basée sur la caractéristique bijective de la fonction de la puissance 3 (et puissance 1/3) dans le corps fini de Galois considéré sur lequel elle est appliquée.

Par la suite, une telle fonction déterministe selon un mode de réalisation de la présente invention est utilisée pour la mise en oeuvre d'une fonction de hachage sur une courbe elliptique.

En appliquant une fonction $f_{a,b}$ selon un mode de réalisation de la présente invention à une chaine de bits résultant d'une fonction de hachage h, on obtient une fonction de hachage comme suit :

$$f_{a,b}(h) \qquad (18)$$

Cette fonction (18) sur une courbe elliptique présente avantageusement les caractéristiques suivantes :

- elle est à sens unique dès que la fonction de hachage h est à sens unique ; et
- elle est résistante aux collisions.

Une telle fonction trouve à s'appliquer dans de nombreux calculs cryptographiques.

Dans un mode de réalisation de la présente invention, on peut prévoir de combiner une fonction $f_{a,b}$ selon un mode de réalisation de la présente invention à deux fonctions de hachage pour obtenir une fonction de hachage sur une courbe elliptique qui ne soit pas différentiable d'une fonction aléatoire appliquée sur une courbe elliptique.

Soient deux fonctions aléatoires de hachage h et h'. La fonction de hachage h est appliquée sur l'ensemble $\{0,1\}^*$ vers A. La fonction h' est appliquée sur l'ensemble $\{0,1\}^*$ vers le corps fini $F_N$ où N est l'ordre du groupe de points utilisés de la courbe.

Dans ces conditions, la fonction suivante est une fonction de hachage sur une courbe elliptique qui n'est pas différentiable d'une fonction aléatoire sur une courbe elliptique :

$$f_{a,b}(h) + h'.G \qquad\qquad (19)$$

Une fonction $f_{a,b}$ selon un mode de réalisation de la présente invention est utilisée pour déterminer un point sur la courbe elliptique. G, un point générateur du groupe de points utilisés, c'est-à-dire points image de $f_{a,b}$ dans le contexte de la mise en oeuvre de la présente invention, est utilisé pour garantir une distribution uniforme des points déterminés.

La présente invention peut avantageusement être mise en oeuvre dans tout type de calcul cryptographique utilisant des courbes elliptiques. Elle peut notamment être avantageuse au sein de protocoles d'authentification par mot de passe, comme PACE (pour 'Password Authenticated Connection Establishment' en anglais). Dans ce cas, elle permet une amélioration des performances par l'utilisation d'une fonction (18), tout en ne permettant aucune attaque liée au temps d'exécution du calcul cryptographique.

La présente invention peut également être avantageusement appliquée dans le contexte des protocoles respectant la vie privée, tels que ceux qui sont utilisés pour le contrôle de documents d'identité électronique, comme les passeports électroniques.

En effet, en écoutant de tels protocoles, il est possible de déterminer les paramètres des courbes elliptiques utilisées, comme décrit dans le document 'Why public elliptic curve parameters are public' disponible sous http://www.larc.usp.br/-pbarreto/tales1.html.

Or, ces paramètres permettent de déterminer la nationalité des personnes ayant ces documents électroniques.

En utilisant la fonction (19), qui peut être applicable de manière non différentiable avec une fonction aléatoire, on peut obtenir une représentation des points qui est indépendante des paramètres publics de la courbe elliptique.

Dans le contexte des schémas de chiffrement basé sur l'identité, la présente invention peut être également avantageusement appliquée. Le schéma de chiffrement de Boneh-Franklin (Dan Boneh et Matthew K. Franklin, Actes de la conférence Crypto 2001) est un exemple d'utilisation d'une telle construction. En effet, pour pouvoir être utilisé dans des conditions sécurisées, ce schéma requiert une courbe elliptique sur laquelle une fonction aléatoire existe. La présente invention fournit une construction qui, à partir d'une fonction aléatoire classique, retourne une fonction aléatoire sur la courbe elliptique. Néanmoins, les courbes elliptiques qui conviennent à un chiffrement selon Boneh-Franklin requièrent une fonction particulière : une fonction de couplage de points. Une fonction de couplage est une fonction ê qui prend en entrée deux points et retourne une valeur sur un corps fini. Ce couplage est intéressant car il a des propriétés mathématiques remarquables. L'équation suivante est vérifiée :

$$\hat{e}(cG,dG)=g^{cd}$$

où g est un générateur du corps fini d'arrivée ;
où c et d sont les logarithmes discrets de cG et dG en base G ; et
où G est un générateur du groupe de points utilisés.

Les auteurs du schéma Boneh-Franklin n'ont proposé qu'un seul type de courbes elliptiques pour leur schéma. La présente invention permet d'augmenter le nombre de courbes elliptiques sur lesquelles leur schéma de chiffrement peut être mis en oeuvre. En effet, grâce aux dispositions de la présente invention, ce schéma de chiffrement peut être mis en oeuvre sur toutes les courbes où un couplage est calculable efficacement et où l'équation (2) est vérifiée.

Dans un mode de réalisation de la présente invention, on peut avantageusement effectuer de la compression de coordonnées de points. En effet, les dispositions de la présente invention permettent de représenter les coordonnées X et Y d'un point P par un paramètre u. Par conséquent, on peut utiliser le paramètre u pour effectuer de la compression car u représente alors un point P(X,Y) avec deux fois moins d'informations.

**Revendications**

1. Procédé d'exécution d'un calcul cryptographique dans un composant électronique comprenant une étape d'obtention de points P sur une courbe elliptique, **caractérisé en ce que**, la courbe elliptique vérifiant l'équation suivante :

$$Y^2 + a_1 XY + a_3 Y = X^3 + a_2 X^2 + a_4 + X + a_6 \quad (1)$$

où $a_1$, $a_2$, $a_3$, $a_4$ et $a_6$ sont des éléments d'un ensemble A d'éléments,
où A est un anneau des entiers modulaires Z/qZ où q est un entier positif produit d'un nombre I de nombres premiers différents strictement supérieurs à 3, I étant un nombre entier supérieur ou égal à 2, ou A est un corps fini Fq avec q puissance d'un nombre entier premier;
où X et Y sont les coordonnées des points P et sont des éléments de A,

ledit procédé comprend les étapes suivantes :

/a/ déterminer un paramètre (11) ;
/b/ obtenir des coordonnées X et Y d'un point P (13) par application d'une fonction (12) audit paramètre ;
la fonction φ d'Euler de A vérifiant l'équation :

$$\varphi(A) \bmod 3 = 1,$$

la fonction étant une fonction inversible et déterministe exprimée par une fraction rationnelle en $a_1$, $a_2$, $a_3$, $a_4$ et $a_6$ et en ledit paramètre dans A, et atteignant au moins un nombre $q/4^I$ de points P, avec I égal à 1 pour un corps fini Fq ;
/c/ utiliser ledit point P dans une application cryptographique de chiffrement ou de hachage ou de signature ou d'authentification ou d'identification.

2.  Procédé d'exécution d'un calcul selon la revendication 1, dans lequel A est différent de $F_{2^n}$, l'équation (1) s'écrivant :

$$Y^2 = X^3 + aX + b,$$

et
où a=$a_2$ et b=$a_6$ ;
dans lequel la fonction déterministe fournit les coordonnées d'un point de la courbe elliptique selon les équations respectives suivantes :

$$X = \left(v^2 - b - \frac{u^6}{27}\right)^{(2\varphi(A)+1)/3} + \frac{u^2}{3} \qquad (4)$$

et

$$Y = uX + v \qquad (5)$$

où u est le paramètre déterminé à l'étape /a/, et
où

$$v = (3a - u^4)/(6u) \qquad (6)$$

3.  Procédé d'exécution d'un calcul selon la revendication 1, dans lequel q vérifie l'équation :

$$q = 2^n \,;$$

où n est un nombre entier impair, l'équation (1) s'écrivant :

$$Y^2 + XY = X^3 + aX^2 + b$$

où $a=a_2$ et $b=a_6$ ;
dans lequel la fonction déterministe fournit les coordonnées d'un point de la courbe elliptique selon les équations respectives suivantes :

$$X = (w^4 + w^3 + b)^{(2\varphi(A)+1)/3} + w \qquad (16)$$

$$Y = uX + w^2$$

où u est le paramètre déterminé à l'étape /a/, et
où $w=a+u^2+u$.

4. Procédé d'exécution d'un calcul selon l'une quelconque des revendications précédentes, dans lequel, à l'étape /a/, le paramètre est obtenu par application d'une fonction de hachage.

5. Procédé d'exécution d'un calcul selon la revendication 4, dans lequel la fonction de hachage est à sens unique.

6. Procédé d'exécution d'un calcul selon l'une quelconque des revendications 1 à 5, dans lequel, à l'étape /a/, le paramètre est obtenu par application d'une première fonction de hachage h et d'une seconde fonction de hachage h', ledit calcul cryptographique comprenant l'application de la fonction suivante :

$$f\,(h) + h'.G$$

où f est la fonction déterministe, et
où G est un générateur d'un groupe de points de la courbe elliptique.

7. Procédé d'authentification par au moins un mot de passe mettant en oeuvre un procédé d'exécution d'un calcul cryptographique selon l'une des revendications précédentes, dans lequel à l'étape /a/ on détermine le paramètre en fonction du mot de passe, ledit mot de passe étant compris dans le paramètre, et dans lequel une étape d'authentification est effectuée sur la base du point P.

8. Procédé de chiffrement d'une donnée, ledit chiffrement étant basé sur l'identité de Boneh-Franklin sur une courbe elliptique admettant une opération de couplage ;
où l'identité est une valeur numérique identifiant une entité,
ledit procédé comprenant les étapes suivantes :

/a/ obtenir un point par application à l'identité d'un procédé d'exécution d'un calcul cryptographique selon la revendication 6 ;
/b/ obtenir une donnée chiffrée en combinant ledit point, un paramètre aléatoire et la donnée.

9. Procédé d'exécution d'un calcul cryptographique dans un composant électronique comprenant une étape d'obtention de points P sur une courbe elliptique, **caractérisé en ce que**, la courbe elliptique vérifiant l'équation suivante :

$$Y^2 + a_1 XY + a_3 Y = X^3 + a_2 X^2 + a_4 + X + a_6 \quad (1)$$

où $a_1$, $a_2$, $a_3$, $a_4$ et $a_6$ sont des éléments d'un ensemble A d'éléments,
où A est un anneau des entiers modulaires Z/qZ où q est un entier positif produit d'un nombre I de nombres premiers différents strictement supérieurs à 3, I étant un nombre entier supérieur ou égal à 2, ou A est un corps fini Fq avec q puissance d'un nombre entier premier ;
où X et Y sont les coordonnées des points P et sont des éléments de A,

ledit procédé comprend les étapes suivantes :

/a/ déterminer un point P de coordonnées X et Y sur la courbe elliptique ;
/b/ obtenir un paramètre par application d'une fonction au point P ;
la fonction φ d'Euler de A vérifiant l'équation :

$$\varphi(A) \bmod 3 = 1,$$

la fonction étant la fonction inverse d'une fonction inversible et déterministe exprimée par une fraction rationnelle en $a_1$, $a_2$, $a_3$, $a_4$ et $a_6$ et en ledit paramètre dans A, et atteignant au moins un nombre $q/4^I$ de points P, avec I égal à 1 pour un corps fini Fq ;
/c/ utiliser ledit paramètre dans une application cryptographique de chiffrement ou de hachage ou de signature ou d'authentification ou d'identification.

**10.** Procédé de compression de données dans lequel les données à compresser correspondent respectivement à des couples de données X et Y correspondant à des coordonnées de points P d'une courbe elliptique vérifiant l'équation suivante :

$$Y^2 + a_1 XY + a_3 Y = X^3 + a_2 X^2 + a_4 + X + a_6 \quad (1)$$

où $a_1$, $a_2$, $a_3$, $a_4$ et $a_6$ sont des éléments d'un ensemble A d'éléments,
où A est un anneau des entiers modulaires Z/qZ où q est un entier positif produit d'un nombre I de nombres premiers différents strictement supérieurs à 3, I étant un nombre entier supérieur ou égal à 2, ou A est un corps fini Fq avec q puissance d'un nombre entier premier ;
où X et Y sont les coordonnées des points P et sont des éléments de A,

dans lequel on applique à chacun desdits couples de données les étapes /a/ à /c/ d'un procédé d'exécution d'un calcul cryptographique selon la revendication 9, et
dans lequel lesdits couples de données sont représentés par les paramètres respectivement obtenus à l'étape /c/.

**11.** Dispositif électronique comprenant des moyens adaptés pour la mise en oeuvre d'un procédé d'exécution d'un calcul cryptographique selon l'une quelconque des revendications 1 à 6.

**12.** Dispositif électronique comprenant des moyens adaptés pour la mise en oeuvre d'un procédé d'exécution d'un calcul cryptographique selon la revendication 9.

**Claims**

**1.** A method of executing a cryptographic computation in an electronic component comprising a step of obtaining points P on an elliptic curve, **characterized in that**, the elliptic curve satisfying the following equation:

$$Y^2 + a_1 XY + a_3 Y = X^3 + a_2 X^2 + a_4 + X + a_6 \quad (1)$$

where $a_1$, $a_2$, $a_3$, $a_4$ and $a_6$ are elements of a set A of elements,

where A is a ring of the modular integers Z/qZ where q is a positive integer product of a number I of different prime numbers that are strictly greater than 3, I being an integer greater than or equal to 2, or A is a finite field $F_q$ with q a power of a prime integer;

where X and Y are the coordinates of the points P and are elements of A,

said method comprises the following steps:

/a/ determining a parameter (11);

/b/ obtaining coordinates X and Y of a point P (13) by applying a function (12) to said parameter;

the Euler function φ of A satisfying the equation:

$$\varphi(A) \bmod 3 = 1,$$

the function being an invertible and deterministic function expressed by a rational fraction in $a_1$, $a_2$, $a_3$, $a_4$ and $a_6$ and in said parameter within A, and attaining at least a number $q/4^I$ of points P, with I equal to 1 for a finite field $F_q$;

/c/ using said point P in a cryptographic encryption or hash or signature or authentication or identification application.

2. The method of executing a computation as claimed in claim 1, in which A is different from $F_{2n}$, equation (1) being written:

$$Y^2 = X^3 + aX + b,$$

and

where $a=a_2$ and $b=a_6$;

in which the deterministic function provides the coordinates of a point of the elliptic curve according to the following respective equations:

$$X = (v^2 - b - \frac{u^6}{27})^{(2\varphi(A)+1)/3} + \frac{u^2}{3} \qquad (4)$$

and

$$Y = uX + v \qquad (5)$$

where u is the parameter determined in step /a/, and where

$$v = (3a - u^4)/(6u) \qquad (6)$$

3. The method of executing a computation as claimed in claim 1, in which q satisfies the equation:

$$q = 2^n;$$

where n is an odd integer,

equation (1) being written:

$$Y^2 + XY = X^3 + aX^2 + b$$

where $a=a_2$ and $b=a_6$;
in which the deterministic function provides the coordinates of a point of the elliptic curve according to the following respective equations:

$$X = (w^4 + w^3 + b)^{(2\varphi(A)+1)/3} + w \qquad (16)$$

$$Y = uX + w^2$$

where u is the parameter determined in step /a/, and
where $w=a+u^2+u$.

4. The method of executing a computation as claimed in any one of the preceding claims, in which, in step /a/, the parameter is obtained by applying a hash function.

5. The method of executing a computation as claimed in claim 4, in which the hash function is one-way.

6. The method of executing a computation as claimed in any one of claims 1 to 5, in which, in step /a/, the parameter is obtained by applying a first hash function h and a second hash function h',
said cryptographic computation comprising the application of the following function:

$$f(h) + h'.G$$

where f is the deterministic function, and
where G is a generator of a group of points of the elliptic curve.

7. A method of authentication by at least one password implementing a method of executing a cryptographic computation as claimed in one of the preceding claims, in which in step /a/ the parameter is determined as a function of the password, said password being included in the parameter, and in which an authentication step is performed on the basis of the point P.

8. A method of encrypting a datum, said encryption being based on the Boneh-Franklin identity on an elliptic curve admitting a coupling operation;
where the identity is a numerical value identifying an entity,
said method comprising the following steps:

/a/ obtaining a point by applying to the identity a method of executing a cryptographic computation as claimed in claim 6;
/b/ obtaining an encrypted datum by combining said point, a random parameter and the datum.

9. A method of executing a cryptographic computation in an electronic component comprising a step of obtaining points P on an elliptic curve, **characterized in that**, the elliptic curve satisfying the following equation:

$$Y^2 + a_1XY + a_3Y = X^3 + a_2X^2 + a_4 + X + a_6 \quad (1)$$

where $a_1$, $a_2$, $a_3$, $a_4$ and $a_6$ are elements of a set A of elements,
where A is a ring of the modular integers Z/qZ where q is a positive integer product of a number I of different prime numbers that are strictly greater than 3, I being an integer greater than or equal to 2, or A is a finite field $F_q$ with q a power of a prime integer;
where X and Y are the coordinates of the points P and are elements of A,

said method comprises the following steps:

/a/ determining a point P with coordinates X and Y on the elliptic curve;
/b/ obtaining a parameter by applying a function to the point P;
the Euler function $\varphi$ of A satisfying the equation:

$$\varphi(A) \bmod 3 = 1,$$

the function being the function inverse to an invertible and deterministic function expressed by a rational fraction in $a_1$, $a_2$, $a_3$, $a_4$ and $a_6$ and in said parameter within A, and attaining at least a number $q/4^I$ of points P, with I equal to 1 for a finite field $F_q$;
/c/ using said parameter in a cryptographic encryption or hash or signature or authentication or identification application.

10. A method of data compression in which the data to be compressed correspond respectively to pairs of data X and Y corresponding to coordinates of points P of an elliptic curve satisfying the following equation:

$$Y^2 + a_1XY + a_3Y = X^3 + a_2X^2 + a_4 + X + a_6 \quad (1)$$

where $a_1$, $a_2$, $a_3$, $a_4$ and $a_6$ are elements of a set A of elements,
where A is a ring of the modular integers Z/qZ where q is a positive integer product of a number I of different prime numbers that are strictly greater than 3, I being an integer greater than or equal to 2, or A is a finite field $F_q$ with q a power of a prime integer;
where X and Y are the coordinates of the points P and are elements of A,

in which steps /a/ to /c/ of a method of executing a cryptographic computation as claimed in claim 9 are applied to each of said pairs of data, and
in which said pairs of data are represented by the parameters respectively obtained in step /c/.

11. An electronic device comprising means adapted for the implementation of a method of executing a cryptographic computation as claimed in any one of claims 1 to 6.

12. An electronic device comprising means adapted for the implementation of a method of executing a cryptographic computation as claimed in claim 9.

**Patentansprüche**

1. Verfahren zur Durchführung einer kryptografischen Berechnung in einem elektronischen Bauteil, umfassend einen Schritt, Punkte P auf einer elliptischen Kurve zu erhalten, **dadurch gekennzeichnet, dass** die elliptische Kurve die folgende Gleichung erfüllt:

$$Y^2 + a_1XY + a_3Y = X^3 + a_2X^2 + a_4 + X + a_6 \quad (1)$$

wobei $a_1$, $a_2$, $a_3$, $a_4$ und $a_6$ Elemente von einer Menge A von Elementen sind,
wobei A ein Restklassenring Z/qZ ist, wobei q eine positive ganze Zahl ist, Produkt von einer Anzahl I von unterschiedlichen Primzahlen, die streng größer als 3 sind, wobei I eine ganze Zahl größer oder gleich 2 ist, oder wobei A ein endlicher Körper Fq ist, mit q als Potenz einer ganzen Primzahl,
wobei X und Y die Koordinaten der Punkte P sind und Elemente von A sind,

wobei das Verfahren die folgenden Schritte umfasst:

(a) Bestimmen von einem Parameter (11),

(b) Erhalten von Koordinaten X und Y von einem Punkt P (13) durch Anwendung einer Funktion (12) auf den Parameter,
wobei die Eulersche-$\varphi$-Funktion von A die Gleichung erfüllt:

$$\varphi(A) \bmod 3 = 1,$$

wobei die Funktion eine invertierbare und deterministische Funktion ist, ausgedrückt durch eine rationale Funktion in $a_1$, $a_2$, $a_3$, $a_4$ und $a_6$, und in dem Parameter über A, und die wenigstens eine Anzahl $q/4^l$ von Punkten P erreicht, mit I gleich 1 für einen endlichen Körper Fq,
(c) Verwenden von dem Punkt P in einer kryptografischen Anwendung zur Verschlüsselung oder zum Hashen oder zum Signieren oder zur Authentifizierung oder zur Identifizierung.

2. Verfahren zur Durchführung einer Berechnung nach Anspruch 1, wobei A verschieden ist von $F_2{}^n$,
wobei die Gleichung (1) sich schreibt:

$$Y^2 = X^3 + aX + b,$$

und
wobei $a = a_2$ und $b = a_6$,
wobei die deterministische Funktion die Koordinaten von einem Punkt der elliptischen Kurve nach den jeweiligen folgenden Gleichungen liefert:

$$X = (v^2 - b - u^6/27)^{(2\varphi(A)+1)/3} + u^2/3 \quad (4)$$

und

$$Y = uX + v \quad (5)$$

wobei u der Parameter ist, der im Schritt (a) bestimmt wird, und wobei

$$v = (3a - u^4)/(6u) \quad (6).$$

3. Verfahren zur Durchführung einer Berechnung nach Anspruch 1, wobei q die Gleichung erfüllt:

$$q = 2^n,$$

wobei n eine ganze ungerade Zahl ist,
wobei die Gleichung (1) sich schreibt:

$$Y^2 + XY = X^3 + a_2X^2 + b$$

wobei $a = a_2$ und $b = a_6$,
wobei die deterministische Funktion die Koordinaten von einem Punkt der elliptischen Kurve gemäß den jeweiligen folgenden Gleichungen liefert:

$$X = (w^4 + w^3 + b)^{(2\varphi(A)+1)/3} + w \qquad (16)$$

$$Y = uX + w^2$$

wobei u der Parameter ist, der im Schritt (a) bestimmt wird, und
wobei $w = a + u^2 + u$.

4.  Verfahren zur Durchführung einer Berechnung nach einem der vorhergehenden Ansprüche, wobei beim Schritt (a) der Parameter durch Anwendung einer Hashfunktion erhalten wird.

5.  Verfahren zur Durchführung einer Berechnung nach Anspruch 4, wobei die Hashfunktion eine Einweg-Hashfunktion ist

6.  Verfahren zur Durchführung einer Berechnung nach einem der Ansprüche 1 bis 5, wobei im Schritt (a) der Parameter durch Anwendung einer ersten Hashfunktion h und einer zweiten Hashfunktion h' erhalten wird,
    wobei die kryptografische Berechnung die Anwendung der folgenden Funktion umfasst:

$$f(h) + h'.G$$

wobei f die deterministische Funktion ist, und
wobei G ein Erzeuger von einer Gruppe von Punkten der elliptischen Kurve ist.

7.  Verfahren zur Authentifizierung durch wenigstens ein Passwort, welches ein Verfahren zur Durchführung einer kryptografischen Berechnung nach einem der vorherigen Ansprüche umsetzt, wobei im Schritt (a) der Parameter als Funktion des Passworts bestimmt wird, wobei das Passwort in dem Parameter enthalten ist, und wobei auf Grundlage des Punktes P ein Schritt zur Authentifizierung durchgeführt wird.

8.  Verfahren zur Verschlüsselung einer Angabe, wobei die Verschlüsselung auf der Boneh-Franklin-Identität basiert, auf einer elliptischen Kurve, welche eine Paarbildung-Operation zulässt, wobei die Identität eine numerischer Wert ist, welcher eine Einheit identifiziert, wobei das Verfahren die folgenden Schritte umfasst:

    (a) Erhalten von einem Punkt durch Anwendung eines Verfahrens zur Durchführung einer kryptografischen Berechnung nach Anspruch 6 auf die Identität,
    (b) Erhalten von einer verschlüsselten Angabe, indem der Punkt, ein zufälliger Parameter und die Angabe kombiniert werden.

9.  Verfahren zur Durchführung einer kryptografischen Berechnung in einem elektronischen Bauteil, umfassend einen Schritt, Punkte P auf einer elliptischen Kurve zu erhalten, **dadurch gekennzeichnet, dass** die elliptische Kurve die folgende Gleichung erfüllt:

$$Y^2 + a_1 XY + a_3 Y = X^3 + a_2 X^2 + a_4 + X + a_6 \quad (1)$$

wobei $a_1$, $a_2$, $a_3$, $a_4$ und $a_6$ Elemente von einer Menge A von Elementen sind,
wobei A ein Restklassenring $Z/qZ$ ist, wobei q eine positive ganze Zahl ist, Produkt von einer Anzahl I von unterschiedlichen Primzahlen, die streng größer als 3 sind, wobei I eine ganze Zahl größer oder gleich 2 ist, oder A ein endlicher Körper Fq ist, mit q als Potenz einer ganzen Primzahl,
wobei X und Y die Koordinaten der Punkte P und Elemente von A sind, wobei das Verfahren die folgenden Schritte umfasst:

    (a) Bestimmen von einem Punkt P von Koordinaten X und Y auf der elliptischen Kurve,

(b) Erhalten von einem Parameter durch Anwendung einer Funktion auf den Punkt P,
wobei die Eulersche-$\varphi$-Funktion von A die Gleichung erfüllt:

$$\varphi(A) \bmod 3 = 1,$$

wobei die Funktion die inverse Funktion einer invertierbaren und deterministischen Funktion ist, ausgedrückt durch eine rationale Funktion in $a_1$, $a_2$, $a_3$, $a_4$ und $a_6$, und in dem Parameter über A, und die wenigstens eine Anzahl $q/4^I$ von Punkten P erreicht, wobei I gleich 1 ist für einen endlichen Körper Fq,
(c) Verwenden von dem Parameter in einer kryptografischen Anwendung zur Verschlüsselung oder zum Hashen oder zum Signieren oder zur Authentifizierung oder zur Identifizierung.

10. Verfahren zur Kompression von Daten, wobei die zu komprimierenden Daten jeweils Paaren von Daten X und Y entsprechen, welche den Koordinaten von Punkten P auf einer elliptischen Kurve entsprechen, welche die folgende Gleichung erfüllt:

$$Y^2 + a_1XY + a_3Y = X^3 + a_2X^2 + a_4 + X + a_6 \quad (1)$$

wobei $a_1$, $a_2$, $a_3$, $a_4$ und $a_6$ Elemente von einer Menge A von Elementen sind,
wobei A ein Restklassenring Z/qZ ist, wobei q eine positive ganze Zahl ist, Produkt von einer Anzahl I von unterschiedlichen Primzahlen, die streng größer als 3 sind, wobei I eine ganze Zahl größer oder gleich 2 ist, oder wobei A ein endlicher Körper Fq ist, mit q als Potenz einer ganzen Primzahl,
wobei X und Y die Koordinaten der Punkte P und Elemente von A sind, wobei auf jedes der Paare von Daten die Schritte (a) bis (c) von einem Verfahren zur Durchführung einer kryptografischen Berechnung nach Anspruch 9 angewendet werden, und

wobei die Paare von Daten durch die Parameter repräsentiert werden, die jeweils im Schritt (c) erhalten werden.

11. Elektronische Vorrichtung, umfassend Mittel die dazu angepasst sind, ein Verfahren zur Durchführung einer kryptografischen Berechnung nach einem der Ansprüche 1 bis 6 durchzuführen.

12. Elektronische Vorrichtung, umfassend Mittel, die dazu angepasst sind, ein Verfahren zur Durchführung einer kryptografischen Berechnung nach Anspruch 9 durchzuführen.

$\varphi$ (A) mod 3 = 1

Paramètre
u

—11

f (u)

—12

P

—13

## FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BARRETO PAULO S. L. M ; HAE KIM Y.** *Fast hashing onto ellitpic curves over fields of characteristic 3,* 15 Novembre 2001, 1-11, http://eprint.iacr.org/2001/098.pdf
- JOURNAL OF CRYPTOLOGY. SPRINGER, 21 Septembre 2004, vol. 17, 297-319
- **SAHADEO PADHYE.** *A Public Key Cryptosystem Based on Singular Cubic Curve,* 04 Avril 2005, 1-9, http://eprint.iacr.org/2005/109.pdf
- A comparison of MNT curves and supersingular curves. **PAGE D et al.** APPLICABLE ALGEBRA IN ENGINEERING, COMMUNICATION AND COMPUTING. SPRINGER, 05 Septembre 2006, vol. 17, 379-392
- **SHOUP.** *Journal of Symbolic Computation,* 1995, vol. 20, 363-397